# EUROPÄISCHE PATENTSCHRIFT

(11) **EP 1 410 121 B1**
(45) Veröffentlichungstag und Bekanntmachung des Hinweises auf die Patenterteilung: **27.08.2008**
(21) Anmeldenummer: 02754901.3
(22) Anmeldetag: 18.07.2002
(51) Int. Cl.: G05B 19/418

(54) **VERFAHREN ZUM DATENAUSTAUSCH ZWISCHEN EINEM BEDIEN- UND BEOBACHTUNGSPROGRAMM UND EINEM FELDGERÄT**
METHOD FOR DATA EXCHANGE BETWEEN AN OPERATING AND MONITORING PROGRAM AND A FIELD DEVICE
PROCEDE D'ECHANGE DE DONNEES ENTRE UN PROGRAMME DE SERVICE ET D'OBSERVATION ET UN APPAREIL DE CHAMP

(30) Priorität: 25.07.2001 DE 10136732
(43) Veröffentlichungstag der Anmeldung: 21.04.2004
(73) Patentinhaber: Endress + Hauser Process Solutions AG, 4153 Reinach BL (CH)
(72) Erfinder: GRIECH, Reinhard, 79540 Lörrach (DE)
(74) Vertreter: Andres, Angelika Maria
(86) Internationale Anmeldenummer: PCT/EP2002/007975
(87) Internationale Veröffentlichungsnummer: WO 2003/010613

(56) Entgegenhaltungen:
- EP-A- 0 917 052
- EP-A- 1 045 302
- WO-A-99/19782

## Beschreibung

Die Erfindung bezieht sich auf den Datenaustausch zwischen einem Bedien- und Beobachtungsprogramm und einem Feldgerät.

In der Prozeßleittechnik werden vielfach Feldgeräte zur Erfassung und Beeinflussung von Prozeßgrößen eingesetzt.
Beispiele für Feldgeräte sind Temperatur-Meßgeräte, die die Temperatur eines Prozeßmediums erfassen, Durchflußmesser, die den Durchfluß eines Prozeßmediums in einem Rohrleitungsabschnitt erfassen oder Füllstandsmesser, die den Füllstand einer Flüssigkeit oder eines Schüttgutes in einem Behälter bestimmen.

Die Prozeßsteuerung erfolgt von einem Leitsystem aus, das mit den einzelnen Feldgeräten über einen Datenbus verbunden ist. Über den Datenbus werden alle für die Prozeßsteuerung notwendigen Informationen zwischen dem Leitsystem und den Feldgeräten ausgetauscht.
Ein vielfach eingesetzter Datenbus arbeitet nach dem HART-Standard, der HART® Foundation. Feldgeräte die nach dem HART-Standard arbeiten, werden auch als HART-Geräte bezeichnet.
Daneben werden in der Prozeßautomatisierungstechnik als Feldbusse u.a. noch Profibus® oder Foundation Fieldbus® eingesetzt.

Neben der reinen Meßwertübertragung erlauben Feldgeräte auch die Übertragung von verschiedenen im Feldgerät abgespeicherten Informationen wie z. B. Parameter (Nullpunkt, Meßwertspanne etc.), Meßkurven sowie Diagnoseinformationen. Die Parameter können vom Leitsystem oder von einem Bedien- und Anzeigegerät aus eingestellt werden.
Dieser Vorgang wird auch als Konfigurierung und Parametrierung des Feldgerätes bezeichnet.

Bei jeder Erstinstallation oder bei einem Gerätetausch muß das Feldgerät konfiguriert und parametriert werden.

Die Bedien- und Beobachtungsprogramme laufen meist auf Rechnereinheiten (PCs, Laptops), die über eine serielle COM-Schnittstelle (z.B. RS232, RS485) mit einem an den Feldbus angeschlossenes Feldbusadapter verbunden sind.

Auf dem Markt erhältliche Bedien- und Beobachtungsprogramme sind z.B. CommuWin von der Firma Endress+Hauser Maulburg oder ReadWin von der Firma Endress+Hauser Wetzer.

Nachteilig an diesen Standard-Anwendungsprogramme ist, daß sie nur in unmittelbarer Nähe zum Feldbus eingesetzt werden können, da eine Kabelverbindung zwischen Rechnereinheit und Feldbusadapter notwendig ist. Ein Datenaustausch über größere Entfernungen (im Extremfall weltweit) ist somit nicht möglich.
Prinzipiell können Standard-Anwendungsprogramme so umgeschrieben werden, daß sie über eine Internetschnittstelle auf die Feldgeräte zugreifen. Dies bedeutet jedoch einen erheblichen Programmieraufwand und umfangreiche Anpassungen.

Weiterhin sind Anwendungsprogramme für Leitsysteme bekannt, die über eine Internetschnittstelle aufs Internet zugreifen und über entsprechende Gateways die Verbindung zu Feldbussen schaffen. Dadurch wird ein Zugriff auf Feldgeräte weltweit möglich.
Anwendungsprogramme für Leitsysteme sind meist sehr umfangreich und teuer.

Aus der Druckschrift WO 99/19782A1 ist ein Verfahren zum Datenaustausch zwischen einer Rechnereinheit und einem Feldgerät via Internet bekannt. Weder ist das auf der Rechnereinheit ablaufende Bedienprogramm näher spezifiziert, noch ist die Schnittstelle, über die die Rechnereinheit mit dem Internet verbunden ist, näher angegeben.

Aus der Druckschrift EP 1 045 302 A1 ist ein weiteres Verfahren zum Datenaustausch via Internet mit einem Feldgerät bekannt. Die Daten werden dabei von einem Webserver bereitgestellt, der mit den Feldgeräten über ein Diagnosesystem verbunden ist. Bei dem auf dem Mobilteil ablaufenden Bedienprogramm, handelt es sich um ein speziell auf das Mobilteil abgestimmtes Bedienprogramm.

Der Erfindung liegt die Aufgabe zugrunde, Verfahren zum Datenaustausch zwischen einem Bedien- und Beobachtungsprogramm und einem Feldgerät zu schaffen, das mit einfachen Mitteln, unter Verwendung von Standard-Anwendungsprogrammen, den Zugriff auf Feldgeräte über größere Entfernungen via Internet ermöglichen.

Gelöst wird diese Aufgabe durch die alternativen Verfahren zum Datenaustausch zwischen einem Bedien- und Beobachtungsprogramm und einem Feldgerät. wie sie in den Anpruchen 1 und 2 beschrieben sind, sowie durch das alternative Rechnersystem gemäß Anspruch 6 und die Rechnereinheit gemäß Anspruch 7.

Die wesentliche Idee der Erfindung besteht darin, daß das Bedien- und Beobachtungsprogramm weiterhin auf eine serielle Schnittstelle zugreift. Das Bedien- und Beobachtungsprogramm "sieht" deshalb nicht, daß die Verbindung zum Feldgerät nicht über eine RS232-Verbindung sondern über das Internet erfolgt.

Vorteilhafte Weiterentwicklungen der Erfindung sind in den Unteransprüchen angegeben.

Gemäß ersten Ausgestaltung der Erfindung erfolgt die Verbindung zwischen dem Bedien- und Beobachtungsprogramm und der Internetschnittstelle über eine erste COM-Schnittstelle, ein Nullmodem-Kabel und eine zweite COM-Schnittstelle.
Hierbei erfolgt die Verbindung über zwei physikalisch vorhandene Schnittstellen z.B. COM1 und COM2 der Rechnereinheit, auf de das Bedien- und Beobachtungsprogramm läuft.
Diese Anwendung benötigt nur einen entsprechenden Treiber für die Intemetschnittstelle, der die Protokollumwandlung vornimmt und die Adressen für die Feldbusadapter verwaltet.

Gemäß der zweiten Ausgestaltung der Erfindung erfolgt die Verbindung zwischen Bedien- und Beobachtungsprogramm und Internetschnittstelle über eine virtuelle serielle Schnittstellen.
Diese Ausgestaltung erfordert zwar einen etwas höheren Programmieraufwand, sie ist aber auch bei Rechnereinheiten insbesondere Laptops einsetzbar, die keine zwei physikalisch vorhandene seriellen Schnittstellen aufweist.

Die Erfindung wird anhand der nachfolgenden Zeichnungen näher erläutert. Es zeigt:
Fig. 1: Feldbus mit Rechnereinheit und mehreren Feldgeräten in schematischer Darstellung,
Fig. 2: Rechnereinheit gemäß einer ersten Ausgestaltung der Erfindung,
Fig. 3: Rechnereinheit gemäß einer zweiten Ausgestaltung der Erfindung.

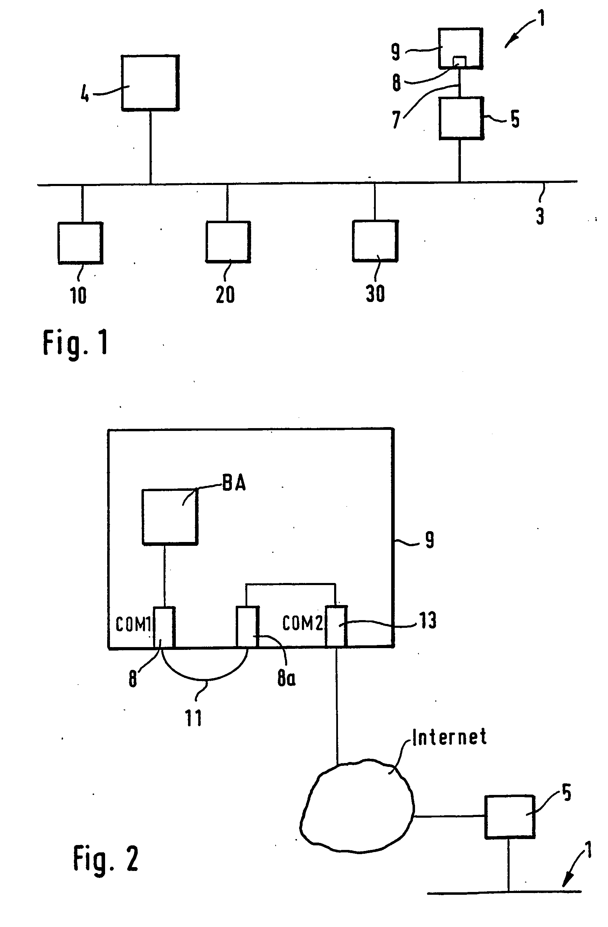

In Figur 1 ist ein Feldbus 1 mit mehreren angeschlossenen Feldgeräten 10, 20, 30 dargestellt.
Die Feldgeräte 10, 20, 30 sind über eine Datenbusleitung 3 mit einem Leitsystem 4 bzw. über einen Feldbusadapter 5 ( z.B. CommuBox der Firma Endress + Hauser ) mit einer Recheneinheit 9 verbunden. Hierzu führt vom Feldbusadapter 5 eine Verbindungsleitung 7 zum COM-Steckeranschluss 8 der Rechnereinheit 9. Die serielle Datenübertragung auf der Verbindungsleitung 7 erfolgt z. B. nach dem RS232 oder RS485 Standard.
Bei der Rechnereinheit 9 handelt es sich um Personal Computer (PC) oder um einen tragbaren Laptop.
Der Fieldbus 1 arbeitet nach den bekannten internationalen Standards wie z.B. HART®, Profibus® oder Foundation Fieldbus®.

Beispiele für Feldgeräte sind z.B. Temperatur-Meßgeräte, die die Temperatur eines Prozeßmediums erfassen, Durchflußmesser, die den Durchfluß in einem Rohrleitungsabschnitt erfassen oder Füllstandsmesser, die den Füllstand eines Füllgutes in einem Behälter bestimmen.
Die entsprechenden Meßwerte werden über die Datenbusleitung 3 an das Leitsystem 4 übertragen. Aufgrund der ermittelten Meßwerte steuert das Leitsystem 4 den gesamten Prozeßablauf.

Neben der reinen Meßwertübertragung erlauben intelligente Feldgeräte (smart field devices) auch die Übertragung von verschiedenen im Feldgerät abgespeicherten Informationen. So lassen sich verschiedenen Parameter vom Leitsystem 4 bzw. von der Rechnereinheit 9 aus aufrufen bzw. verändern. Derartige Parameter sind z.B. der Nullpunkt, der Meßbereich (Spanne) oder die Einheit in der der Meßwert ausgegeben wird.
Weiterhin können etwa bei Füllstandsmeßgeräten, die nach dem Echo-Prinzip arbeiten, Echo-Kurven ausgelesen werden. Aus der Echo-Kurve können Rückschlüsse auf die Funktionsfähigkeit des Füllstandsmeßgerätes getroffen werden.
Daneben können auch Diagnoseinformationen abgerufen werden. Einigen Feldgeräte sind bereits in der Lage eine Eigendiagnose durchzuführen. D. h. es werden bestimmte Kenngrößen des Feldgerätes auf Abweichungen vom Sollwert überwacht.

Zur Darstellung dieser Informationen und Änderung der Parameter dienen spezielle Bedien- und Beobachtungsprogramme.
Diese Bedien- und Beobachtungsprogramme werden auf der Rechnereinheit 9 installiert. Herkömmliche Programme greifen direkt auf die COM-Schnittstelle 8 der Rechnereinheit 9 zu.

Fig. 2 zeigt eine Rechnereinheit 9 nach einer ersten Ausgestaltung der Erfindung. Die Rechnereinheit 9 weist neben einer ersten COM-Schnittstelle 8 eine zweite COM-Schnittstelle 8a auf.
Die beiden Schnittstellen 8 und 8a sind über ein Nullmodem-Kabel 11 miteinander verbunden.

Die Rechnereinheit 9 weist eine Netzwerkschnittstelle z.B. eine Internetschnittstelle 13, die über das Internet mit einem an den Feldbus 1 angeschlossenen Feldbusadapter 5 verbunden ist.
Das Bedien- und Beobachtungprogramm BA greift in gewohnter Weise auf die COM1 Schnittstelle 8 der Rechnereinheit 9 zu. Über das Nullmodem-Kabel 11 und die COM2 Schnittstelle 8a erfolgt die Datenverbindung mit der Internetschnittstelle 13. Die Internetschnittstelle 13 sorgt mit dem entsprechenden Treiberprogramm (Bus-Client) für die Umsetzung der Daten auf TCP/IP Standard, sowie über ein gespeichertes Adreßbuch, die Auswahl der entsprechenden Internetadresse des Feldbusadapters 5. Über das Internet werden die Daten zwischen Rechnereinheit 9 und Feldbusadapter 5 ausgetauscht. Der Feldbusadapter sorgt für die Umwandlung des Protokolls auf den entsprechenden Feldbusstandard z.B. HART®. Als weiterer Vorteil ist zu nennen, daß ohne ein mechanisches Umstecken, über die Internetschnittstelle 13 mehrerer verschiedenen Feldbusse angesteuert werden können.

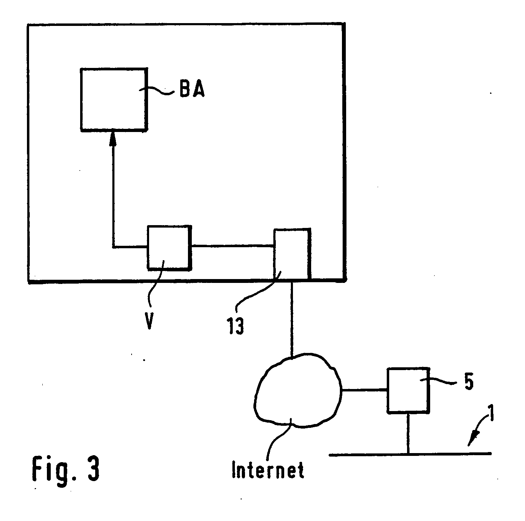

Fig. 3 zeigt eine alternative Ausgestaltung der Erfindung.
Hierbei erfolgt die Verbindung zwischen dem Bedien- und Beobachtungsprogramm BA und der Internetschnittstelle 13 über eine virtuelle Schnittstelle V.
Diese Ausgestaltung der Erfindung erfordert zwar einen höheren Programmieraufwand, da ein Software-Programm für die virtuelle Schnittstelle geschrieben werden muß. Der Vorteil hier ist aber, daß sie auch für Rechnereinheiten 9 geeignet ist, die keine zwei COM-Schnittstellen aufweisen, was vielfach bei Laptops der Fall ist.

Die wesentliche Idee der Erfindung besteht darin, daß mit herkömmlichen Bedien-und Beobachtungsprogramme ein Zugriff auf Feldgeräte via Internet möglich ist, ohne daß eine aufwendige Umschreibung des Quell-Codes des Bedien- und Beobachtungsprogramms notwendig ist. Dies ist vor allem dann wichtig, wenn der Quell-Code des Bedien- und Beobachtungsprogramms nicht bekannt ist, weil es sich nicht um ein firmeneigenes Programm handelt.

Die Erfindung ist nicht auf das Internet als Netzwerk beschränkt, sondern auch bei WANs (Wide Area Networks) oder LANs (Local Area Networks) einsetzbar.

## Patentansprüche

1. Verfahren zum Datenaustausch zwischen einem Bedien- und Beobachtungsprogramm (BA) und einem Feldgerät (10, 20, 30), das über einen Feldbusadapter (5) mit einem Netzwerk, z.B. WAN, LAN oder Internet, verbunden ist,
wobei das Bedien- und Beobachtungsprogramm (BA) auf einer Rechnereinheit (9), die über eine Netzwerkschnittstelle (13) mit dem Netzwerk, z.B. WAN, LAN oder Internet, verbunden ist und die eine serielle Schnittstelle (8) aufweist, abläuft
**dadurch gekennzeichnet, daß** das Bedien- und Beobachtungsprogramm (BA)
mit der Netzwerkschnittstelle (13) verbunden ist und
zum Zwecke des Datenaustauschs mit dem Feldgerät (10, 20, 30) über die serielle Schnittstelle (8) auf die Netzwerkschnittstelle (13) zugreift,
wobei die Verbindung zwischen dem Bedien- und Beobachtungsprogramm (BA) und der Netzwerkschnittstelle (13) über die als erste COM-Schnittstelle ausgelegte serielle Schnittstelle (8), ein Nullmodem-Kabel (11) und eine zweite COM-Schnittstelle (8a) der Rechnereinheit (9) erfolgt.

2. Verfahren zum Datenaustausch zwischen einem Bedien- und Beobachtungsprogramm (BA) und einem Feldgerät (10, 20, 30), das über einen Feldbusadapter (5) mit einem Netzwerk, z.B. WAN, LAN oder internet, verbunden ist,
wobei das Bedien- und Beobachtungsprogramm (BA) auf einer Rechnereinheit (9), die über eine Netzwerkschnittstelle (13) mit dem Netzwerk verbunden ist, abläuft
**dadurch gekennzeichnet, daß** das Bedien- und Beobachtungsprogramm (BA)
mit der Netzwerkschnittstelle (13) über eine virtuelle Schnittstelle (V) verbunden ist und zum Zwecke des Datenaustauschs mit dem Feldgerät (10, 20, 30) Ober die virtuelle Schnittstelle (V) auf die Netzwerkschnittstelle (13) zugreift.

3. Verfahren nach einem der vorhergehenden Ansprüche 1 bis 2, **dadurch gekennzeichnet, daß** der Feldbusadapter (5) nach dem HART®-Standard arbeitet.

4. Verfahren nach einem der vorhergehenden Ansprüche 1 bis 3, **dadurch gekennzeichnet, daß** der Feldbusadapter (5) nach dem Profibus®-Standard arbeitet.

5. Verfahren nach einem der vorhergehenden Ansprüche 1 bis 3, **dadurch gekennzeichnet, daß** der Feldbusadapter (5) nach dem Foundation Fieldbus®-Standard arbeitet.

6. Rechnersystem zum Datenaustausch zwischen einem Bedien- und Beobachtungsprogramm (BA) und einem Feldgerät (10, 20, 30), das über einen Feldbusadapter (5) mit einem Netzwerk, z.B. WAN, LAN oder Internet, verbunden ist, das System umfassend eine Rechnereinheit (9) und ein Nullmodemkabel (11), wobei die Rechnereinheit (9) eine als erste COM-Schnittstelle ausgelegte serielle Schnittstelle (8), eine Netzwerkschnittstelle (13) zur Verbindung der Rechnereinheit (9) mit dem Netzwerk, z.B. WAN, LAN oder Internet, sowie eine zweite COM-Schnittstelle (8a) aufweist, und wobei die erste COM-Schnittstelle (8) und die zweite COM-Schnittstelle (8a) über das Nullmodemkabel (11) miteinander verbunden sind, die Rechnereinheit (9) weiter umfassend Mittel zum Ablauf des Datenaustausch-Verfahrens nach einem der Ansprüche 1 oder 3-5.

7. Rechnereinheit (9) zum Datenaustausch zwischen einem Bedien- und Beobachtungsprogramm (BA) und einem Feldgerät (10, 20, 30), das über einen Feldbusadapter (5) mit einem Netzwerk, z.B. WAN, LAN oder Internet, verbunden ist, die Rechnereinheit (9) umfassend eine virtuelle Schnittstelle (V), eine Netzwerkschnittstelle (13) zur Verbindung der Rechnereinheit (9) mit dem Netzwerk, z.B. WAN, LAN oder Internet, und Mittel zum Ablauf des Datenaustausch-Verfahrens nach einem der Ansprüche 2-5.

## Claims

1. Process for exchanging data between an operating and observation program (BA) and a field device (10, 20, 30) that is connected to a network - e.g. WAN, LAN or Internet - by means of a fieldbus adapter (5),
where the operating and observation program (BA) runs on a computer unit (9), which is connected to the network - e.g. WAN, LAN or Internet - by means of a network interface (13) and which exhibits a serial port (8),
**characterized in that** the operating and observation program (BA) is connected to the network interface (13) and accesses the network interface (13) by means of the serial port (8) for the purpose of exchanging data with the field device (10, 20, 30), where the connection between the operating and observation program (BA) and the network interface (13) takes place by means of the serial port (8) designed as the first COM port, a null modem cable (11) and a second COM port (8a) of the computer unit (9).

2. Process for exchanging data between an operating and observation program (BA) and a field device (10, 20, 30) that is connected to a network - e.g. WAN, LAN or Internet - by means of a fieldbus adapter (5),
where the operating and observation program (BA) runs on a computer unit (9) which is connected to the network by means of a network interface (13), **characterized in that** the operating and observation program (BA) is connected to the network interface by means of a virtual interface (V) and accesses the network interface (13) via the virtual interface (V) for the purpose of exchanging data with the field device (10, 20, 30).

3. Process as per one of the previous Claims 1 to 2 **characterized in that** the fieldbus adapter (5) works using the HART® standard.

4. Process as per one of the previous Claims 1 to 3 **characterized in that** the fieldbus adapter (5) works using the Profibus® standard.

5. Process as per one of the previous Claims 1 to 3 **characterized in that** the fieldbus adapter (5) works using the Foundation Fieldbus® standard.

6. Computer system for exchanging data between an operating and observation program (BA) and a field device (10, 20, 30) which is connected to a network - e.g. WAN, LAN or Internet - by means of a fieldbus adapter (5), with the system comprising a computer unit (9) and a null modem cable (11) where the computer unit (9) exhibits a serial port (8) designed as the first COM port, a network interface (13) for connecting the computer unit (9) to the network - e.g. WAN, LAN or Internet - as well as a second COM port (8a), and where the first COM port (8) and the second COM port (8a) are connected to one another by means of the null modem cable (11) and the computer unit (9) comprises resources for running the data exchange process as per one of the Claims 1 or 3-5.

7. Computer unit (9) for exchanging data between an operating and observation program (BA) and a field device (10, 20, 30) that is connected to a network - e.g. WAN, LAN or Internet - by means of a fieldbus adapter (5), with the computer unit (9) comprising a virtual interface (V), a network interface (13) for connecting the computing unit (9) to the network - e.g. WAN, LAN or Internet - and resources for running the data exchange process as per one of the Claims 2-5.

## Revendications

1. Procédé destiné à l'échange de données entre un programme de contrôle-commande (BA) et un appareil de terrain (10, 20, 30), qui est relié à un réseau, p. ex. WAN, LAN ou Internet, par le biais d'un adaptateur de bus de terrain (5),
le programme de contrôle-commande (BA) étant exécuté sur une unité d'ordinateur (9), qui est reliée au réseau, p. ex. WAN, LAN ou Internet, par le biais d'une interface réseau (13), et qui présente une interface série (8), **caractérisé en ce que** le programme de contrôle-commande (BA) est relié à l'interface réseau (13) et accède à l'interface réseau (13) par l'intermédiaire de l'interface série (8) à des fins d'échange de données avec l'appareil de terrain (10, 20, 30),
la liaison entre le programme de contrôle-commande (BA) et l'interface réseau (13) étant réalisée par l'intermédiaire de l'interface série (8) définie en tant que premier port COM, un câble nul modem (11) et un deuxième port COM (8a) de l'unité d'ordinateur (9).

2. Procédé destiné à l'échange de données entre un programme de contrôle-commande (BA) et un appareil de terrain (10, 20, 30), qui est relié à un réseau, p. ex. WAN, LAN ou Internet, par le biais d'un adaptateur de bus de terrain (5),
le programme de contrôle-commande (BA) étant exécuté sur une unité d'ordinateur (9), qui est reliée au réseau par le biais d'une interface réseau (13), **caractérisé en ce que** le programme de contrôle-commande (BA) est relié à l'interface réseau (13) par l'intermédiaire d'une interface virtuelle (V) et accède à l'interface réseau (13) par l'intermédiaire de l'interface virtuelle (V) à des fins d'échange de données avec l'appareil de terrain (10, 20, 30).

3. Procédé selon l'une des revendications précédentes 1 à 2, **caractérisé en ce que** l'adaptateur de bus de terrain (5) fonctionne d'après le standard HART®.

4. Procédé selon l'une des revendications précédentes 1 à 3, **caractérisé en ce que** l'adaptateur de bus de terrain (5) fonctionne d'après le standard Profibus®.

5. Procédé selon l'une des revendications précédentes 1 à 3, **caractérisé en ce que** l'adaptateur de bus de terrain (5) fonctionne d'après le standard Foundation Fieldbus®.

6. Système d'ordinateur destiné à l'échange de données entre un programme de contrôle-commande (BA) et un appareil de terrain (10, 20, 30), lequel est relié à un réseau, p. ex. WAN, LAN ou Internet, par l'intermédiaire d'un adaptateur de bus de terrain (5), le système comprenant une unité d'ordinateur (9) et un câble nul modem (11), l'unité d'ordinateur (9) comportant une interface série (8) définie en tant que premier port COM, une interface réseau (13) destinée à la liaison de l'unité d'ordinateur (9) au réseau, p. ex. WAN, LAN ou Internet, ainsi qu'un deuxième port COM (8a), et le premier port COM (8) et le deuxième port COM (8a) étant reliés entre eux par l'intermédiaire d'un câble nul modem (11), l'unité d'ordinateur comprenant encore des moyens destinés à l'exécution de l'échange de données selon l'une des revendications 1 ou 3 à 5.

7. Unité d'ordinateur (9) destinée à l'échange de données entre un programme de contrôle-commande (BA) et un appareil de terrain (10, 20, 30), lequel est relié à un réseau, p. ex. WAN, LAN ou Internet, par l'intermédiaire d'un adaptateur de bus de terrain (5), l'unité d'ordinateur (9) comprenant une interface virtuelle (V), une interface réseau (13) destinée à la liaison de l'unité d'ordinateur (9) au réseau, p. ex. WAN, LAN ou Internet, et des moyens destinés à l'exécution de l'échange de données selon l'une des revendications 2 à 5.
